# EUROPÄISCHE PATENTSCHRIFT

(11) **EP 1 566 102 B1**
(45) Veröffentlichungstag und Bekanntmachung des Hinweises auf die Patenterteilung: **26.11.2008**
(21) Anmeldenummer: 05003212.7
(22) Anmeldetag: 16.02.2005
(51) Int. Cl.: A23B 4/26, A23B 4/30, A23B 4/02

(54) **Pökelverfahren für Rohfleisch und Vorrichtung zu seiner Durchführung**
Raw meat pickling process and apparatus for this purpose
Saumurage de viande crue et appareil à cet effet

(30) Priorität: 18.02.2004 DE 102004007963
(43) Veröffentlichungstag der Anmeldung: 24.08.2005
(73) Patentinhaber: Sigl, Klaus, 78048 Villingen-Schwenningen (DE)
(72) Erfinder: Sigl, Klaus, 78048 Villingen-Schwenningen (DE)
(74) Vertreter: Neymeyer, Franz

(56) Entgegenhaltungen:
- EP-A- 0 172 497
- EP-A- 1 020 118
- WO-A-89/11224
- CH-A- 198 124
- DE-C- 833 584
- DE-C- 941 949
- DE-U- 6 926 086

## Beschreibung

Die Erfindung betrifft ein Verfahren zum Pökeln und Reifen von Frischfleisch, insbesondere von Rohschinken und Salami, bei dem in einen Pökelbehälter eingelegtes Pökelgut mehrfach mit der sich bildenden Eigenlake benetzt wird, sowie eine Vorrichtung mit einem Pökelbehälter, der mittels einer Türe oder eines Deckels dicht verschließbar und über eine Vakuumleitung an eine Vakuumpumpe anschließbar ist, zur Durchführung des Pökelverfahrens.

Aus DE 195 41 488 A1 ist bereits ein Verfahren zum Pökeln und Garen von Fleisch bekannt, bei dem Pökelmittel unter zeitlichem veränderlichem Druck von außen in das Fleisch eingebracht werden, wobei die zeitliche Veränderung des Drucks periodisch erfolgt. Dieses Verfahren dient aber in erster Linie dazu, rohes Fleisch in den für den Endverbrauch bestimmten Behältern zu pökeln und zu garen. Für den Endverbrauch bestimmte Behälter sind beispielsweise Blechdosen, Plastikbecher, Gläser mit Schraubdeckeln, Plastikschalen, Beutel, Schläuche und dgl.

Aus DE 195 39 247 C2 ist eine Vorrichtung zum Behandeln von Fleischstücken bekannt, die einen Behälter zur Aufnahme der Fleischstücke umfaßt. Dabei ist der Behälter flüssigkeitsdicht ausgebildet und mit einer Beschikkungsöffnung für die Fleischstücke versehen. Außerdem weist dieser Behälter eine Anordnung zum Einbringen von Impulsen auf, durch welche ein Massieren oder Kneten der Fleischstücke mittels eines Schwingungserzeugers vorgesehen ist.

Andere Pökelvorrichtungen sind mit einer flüssigkeitsdicht verschließbaren, mehreckigen Trommel versehen, die zum Pökeln in Drehung versetzt wird (SU 891 047). Zudem soll zur Intensivierung der Fleischbehandlung der Behälter durch exzentrische Lagerung Hubbewegungen oder Schwingbewegungen ausführen.

Bei einem anderen, aus DE 196 21 701 C2, bekannten Verfahren zum Pökeln von Fleischstücken in einer Pökellake, wird die Pökellake in einen Behälter gegeben, und die Fleischstücke werden zur Aufnahme von Salz der Pökellake im Behälter für eine vorbestimmte Verweildauer der Wirkung der Pökellake ausgesetzt. Dabei werden die Fleischstücke in periodischen Zeitabschnitten, die zwischen einer Minute und 360 Minuten betragen können, mehrmals relativ zueinander bewegt, so dass möglichst alle Fleischstücke nacheinander für einen bestimmten Teil der Verweildauer an ihrer gesamten Oberfläche von der Pökellake umgeben sind. Es findet also auch bei diesem bekannten Pökelverfahren eine Bewegung der Fleischstücke in periodischen Zeitabschnitten statt.

Aus DE 36 32 313 C2 ist ein Verfahren zum Vorbehandeln von Räuchergut bekannt, bei dem das Räuchergut in eine Vorrichtung eingebracht, dort unter Pressung einem Vakuum ausgesetzt und wiederholt mit Pökelflüssigkeit übergossen wird. Auch bei diesem Verfahren findet ein periodisches Bewegen statt, indem der Behälter des Pökelguts wenigstens einmal täglich, ca. 14 Tage lang, um eine horizontale Achse gedreht wird. Dabei ist dieser Behälter luftdicht verschlossen und zwar durch einen Behälterdeckel, der das Pökelgut beim Schließen des Behälters zusammenpreßt. Im Behälter wird nach dem Schließen ein Vakuum erzeugt, das während der gesamten Behandlungsdauer aufrechterhalten wird.

Aus der EP 0 172 497 ist eine Vorrichtung zur Pökelung von Fleisch und Schinken aller Art bekannt, bei der durch Programmierung der Arbeitsläufe eine Rationalisierung erreicht werden soll. Hierzu sind mehrere hintereinandergesetzte Vakuumkammern vorgesehen, welche auf der Frontseite zur Beschickung geöffnet werden können und vakuumdicht verschließbar sind. Im Innern dieser Vakuumkammern befinden sich jeweils Berieselungsanlagen für Luft- und/oder Laugenzuführung. Die sich in den einzelnen Vakuumkammern befindende Lauge kann unterseitig abgesaugt und der Berieselungsanlage zugeführt werden. Die Beschickung der einzelnen Vakuumkammern erfolgt durch mit Fleischstücken beladene Hordenwagen, die große Mengen aufnehmen können. Im Deckenbereich der Vakuumkammern sind mechanisch oder pneumatisch beaufschlagbare Preßzylinder vorgesehen, mit denen das auf den Hordenwagen aufgeschichtete Fleisch in vertikaler Richtung gepreßt werden kann. Mit einem Pumpenaggregat wird die Luft- und Laugenzufuhr bzw. -Abfuhr und die Vakuumbildung bewerkstelligt.

Um eine durchgehende und bessere Pökelbehandlung der großen Fleischmengen innerhalb der einzelnen Vakuumkammern zu erreichen, sind zusätzlich Vibratoren vorgesehen, durch welche das Pökelgut in Schwingungen versetzt werden soll.

Abgesehen davon, dass der technisch-mechanische Aufwand dieser bekannten Vorrichtung sehr groß ist, lassen sich mit ihr keine einheitlich guten Qualitätsergebnisse erzielen. Auch ist bei dem mit dieser Vorrichtung angewendeten Verfahren eine Zeitersparnis nicht erzielbar.

Aus DE-OS 28 18 862 ist ein Pökelverfahren bekannt, bei dem die zu pökelnden Fleischstücke in eine um eine waagrechte Achse drehbare Kammer gegeben werden, die nach dem Einlegen der Stücke in Drehung versetzt und anschließend evakuiert wird. Dann wird in die Kammer eine Pökelflüssigkeit in einer solchen Menge eingegeben, die gerade der benötigten Menge für die zu pökelnden Fleischstücke entspricht oder geringfügig darüberliegt. Danach wird die Kammer mit einem inerten oder neutralen Gas unter erhöhten Druck gesetzt. Am Ende der Behandlungsdauer wird wieder der normale Umgebungsdruck in der Kammer erzeugt und die Drehung eingestellt.

Dabei kann eine gewisse Zeit nach der Herstellung des erhöhten Druckes in der Kammer, der durch das eingeführte Gas erzeugt wird, der Druck unter den Atmosphärendruck zyklisch verringert und wieder erhöht werden. Als Gas wird dabei Stickstoff verwendet. Der erhöhte Gasdruck soll dabei den Wert von 2,9 bar nicht überschreiten und dieser Zyklus etwa eine Stunde dauern.

Bei diesem Verfahren ist sowohl die Zufuhr von Pökelflüssigkeit in den Pökelbehälter als auch die Zufuhr eines Gases, beispielsweise Stickstoff, unter Erzeugung eines gegenüber dem Normalluftdruck auf knapp unter drei bar erhöhten Druck in der Pökelkammer bzw. in dem Pökelbehälter erforderlich und die zugeführte Pökelflüssigkeit wird im Pökelgut angesammelt. Es ist deshalb zumindest fraglich, ob mit diesem Verfahren das sog. trockene Pökeln von Fleisch, insbesondere von Rohschinken, durchgeführt werden kann.

Allgemein bekannt ist auch, dass Pökelverfahren bevorzugt bei einer Temperatur von 2° bis 4°C durchgeführt werden und dass Stickstoff auch zur Kühlung bzw. Verminderung der Pökeltemperatur eingesetzt wird.

Bei dem Aus WO 89/11224 bekannten Pökelverfahren wird dem Pökelgut in einem mit einem Siebboden versehenen Pökelbehälter eine Behandlungsflüssigkeit zugeführt und diese zusammen mit der Eigenlake nach dem Durchlaufen des Pökelguts mittels einer Flüssigkeitspumpe und eine Sprüheinrichtung in regelmäßigen Abständen während der gesamten Pökelzeit wiederholt aufgesprüht.

Bei dem aus der DE 941 949 C bekannte Verfahren zum Pökeln von Fleisch wird eine Verkürzung der Pökelzeit dadurch angestrebt, daß das zu pökelnde Fleisch periodisch einem Vakuum aussetzt und in den Pausen zwischen den einzelnen Vakuumbehandlungen den Druck erhöht wird. Durch eine solche Behandlung soll es möglich sein, einerseits Luft und Gase in ganz kurzer Zeit völlig aus dem Fleisch zu entfernen und andrerseits auch das Eindringen der zugeführten Lake in die entgasten Zellen des Fleischstücks zu beschleunigen.

Bei keinem dieser bekannten Pökelverfahren ist eine zeitlich auf eine Lakenbildungsphase folgenden Reifephase vorgesehen.

Der Erfindung liegt die Aufgabe zugrunde, ein Pökelverfahren zu entwickeln, mit dem in kürzerer Zeit handwerklich oder industriell größere Rohfleischmengen mit besserer und vor allem gleichmäßiger Qualität ohne Bewegen des Pökelguts haltbar gemacht und in einen gebrauchsfertigen Zustand gebracht werden können, sowie eine einfach herstellbare, einfach handhabbare und einfach anwendbare Vorrichtung zur Durchführung des Verfahrens zu schaffen.

Gelöst wird diese Aufgabe erfindungsgemäß durch folgende Verfahrensschritte:
a) das Pökelgut wird während einer mehrere Stunden dauernden Lakenbildungsphase einem verminderten atmosphärischen Druck ausgesetzt,
b) während dieser Lakenbildungsphase wird die sich bildende Lake laufend oder in geregelten Zeitabständen vom Pökelgut abgesaugt und gesammelt;
c) während einer der Lakenbildungsphase folgenden, etwa gleich lange dauernden Reifephase, wird unter mehrfacher Wiederherstellung des verminderten atmosphärischen Drucks in einer Folge von Benetzungsvorgängen jeweils ein Teil der gesammelten Lake auf das Pökelgut verteilt und von diesem wieder abgesaugt.

Die Vorrichtung zur Durchführung dieses Verfahrens nach dem Oberbegriff des Anspruches 8 umfaßt ein Lakenbehältnis, das an eine Vakuumpumpe anschließbar ist und das durch eine mit einem elektrisch steuerbaren Ventil versehene Lakenabsaugleitung und durch eine mit einem weiteren elektrisch steuerbaren Ventil versehene Lakenzuführleitung mit dem Pökelbehälter verbunden ist.

Bei diesem Verfahren findet während seiner gesamten Laufzeit kein Bewegen und Versetzen des Pökelgutes innerhalb des dafür vorgesehenen Pökelbehälters statt. Als Lake wird nur die Eigenlake verwendet, die sich aus dem Pökelgut selbst bildet bzw. aus diesem freigesetzt wird. Obwohl keinerlei Bewegung des Pökelgutes während der gesamten Verfahrensdauer stattfindet, wird eine erhebliche Verkürzung der Behandlungs- und Reifezeit erzielt und zudem eine gleichmäßig gute Pökelqualität gewährleistet.

Während sich bei herkömmlichen Pökelverfahren die Pökel- und Reifezeit über mehr als 14 Tage hinzieht, kann beim erfindungsgemäßen Verfahren die Lakenbildungsphase auf 60 bis 80 Stunden, vorzugsweise auf 72 Stunden, reduziert werden, so dass bei gleich langer darauffolgender Reifephase eine gesamte Verfahrensdauer von etwa sechs Tagen anzunehmen ist.

Die Ansprüche 2 bis 4 betreffen Ausgestaltungen des Verfahrens, die sich in der Praxis als vorteilhaft erwiesen haben, wobei die Ausgestaltungen der Ansprüche 5 bis 7 insbesondere verfahrenstechnische Vorteile bringen, die insbesondere mit der Erzielung eines guten Qualitätsergebnisses und einer einfachen Handhabung verbunden sind.

Die Vorrichtung zur Durchführung des Verfahrens, die Gegenstand des Anspruches 8 ist, ist sehr einfach aufgebaut und somit leicht und preisgünstig herstellbar, wobei die Ansprüche 9 bis 17 vorrichtungstechnische Ausgestaltungen der Erfindung betreffen, die einen vollautomatischen Betrieb bzw. eine vollautomatische Durchführung des erfindungsgemäßen Pökelverfahrens ermöglichen und die angestrebte Qualität des Pökelgutes gewährleisten.

Anhand der Zeichnung wird im folgenden ein Ausführungsbeispiel der Erfindung näher erläutert. Es zeigt:
- Fig. 1: in vereinfachter isometrischer Darstellung die wesentlichen Teile der Vorrichtung, die für die Durchführung des erfindungsgemäßen Verfahrens vorgesehen sind;
- Fig. 2: eine andere Ausführungsform der Vorrichtung zur Durchführung des Verfahrens;
- Fig. 3: ein Funktions- und Schaltschema zur Erläuterung des Verfahrens und
- Fig. 4: in isometrischer Darstellung den Lakenverteiler aus Fig. 1 als Einzelbaugruppe.

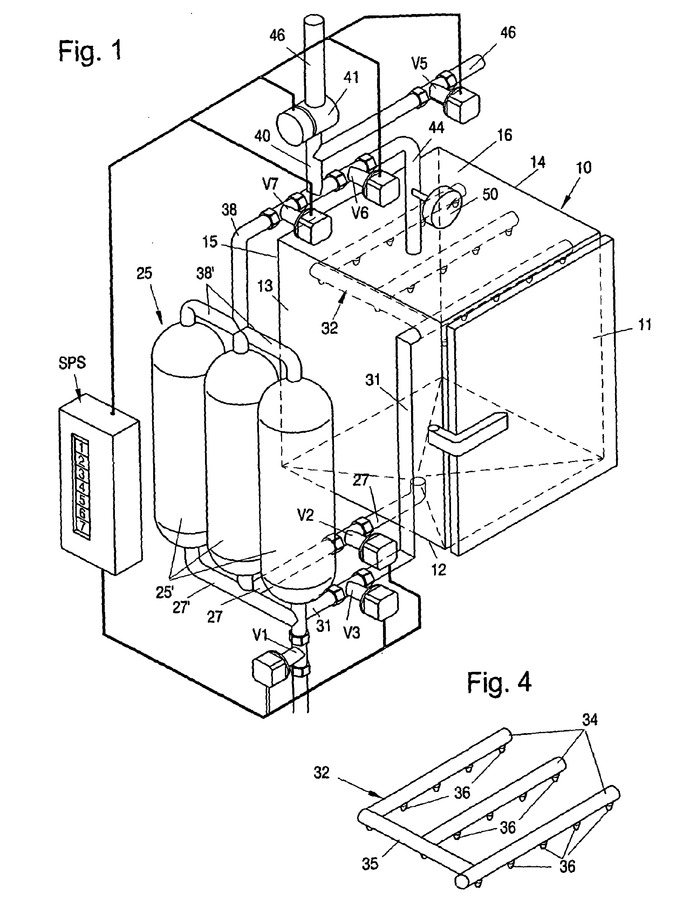

Die in Fig. 1 dargestellte Vorrichtung des Verfahrens zum Pökeln und Reifen von Frischfleisch, insbesondere von Rohschinken und Salami, weist einen Pökelbehälter 10 auf, der frontseitig mittels einer Schwenktüre 11 vakuumdicht verschlossen werden kann. Dieser Pökelbehälter 10 besteht aus rostfreiem Edelstahlblech und hat ein Fassungsvermögen von beispielsweise einem Kubikmeter oder mehr. Er hat eine quaderförmige Gestalt und besitzt somit einen Boden 12, zwei vertikale Seitenwände 13 und 14, eine Rückwand 15 sowie einen Deckel 16.

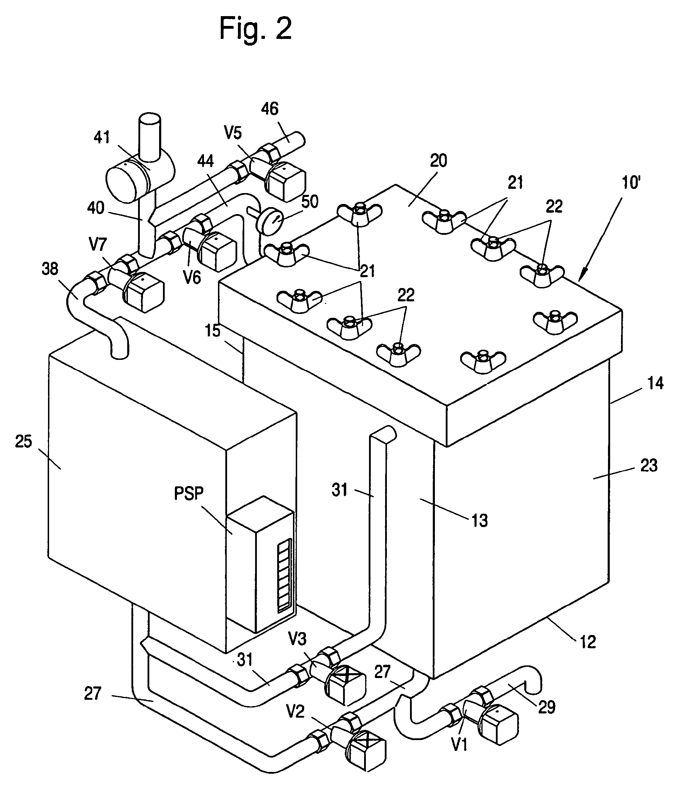

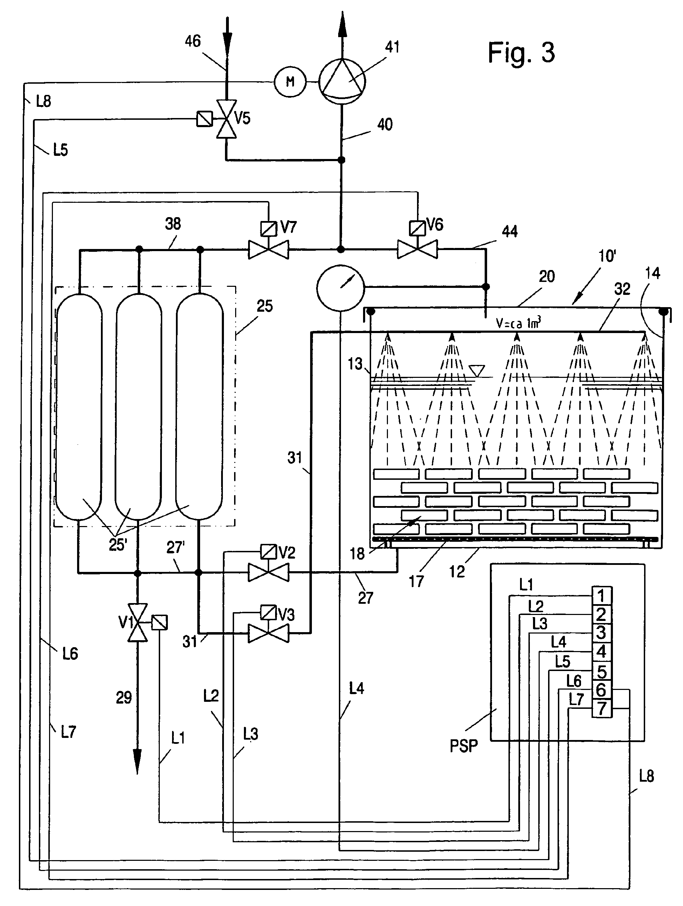

Bei der Ausführungsform der Fig. 2 besitzt der Pökelbehälter 10' statt einer frontseitigen Schwenktüre 11 einen nach oben abnehmbaren Deckel 20, der mittels Flügelmuttern 21 und Gewindebolzen 22 auf dem kastenartigen Unterteil 23 vakuumdicht festgeschraubt werden kann, wenn der Pökelbehälter 10' mit Pökelgut 18 (Fig. 3) beschickt ist.

Statt der der Einfachheit wegen dargestellten Flügelschrauben, können andere Schließvorrichtungen, z. B.

Spannhebelverschlüsse, zum vakuumdichten Verschließen des Deckels 20 vorgesehen sein.

Damit die sich bildende Eigenlake des Pökelgutes 18 am Boden 12 des Pökelbehälters 10 bzw. 10' besser abgesaugt werden kann, ist das Pökelgut 18 auf einem Siebboden 17 gelagert, und zwar ohne Zwischenlagen in mehreren Schichten gestapelt, die bis zu 80% des Rauminhalts des Pökelbehälters 10 bzw. 10' einnehmen können.

Dieser Siebboden 17 ist nur in Fig. 3 schematisch dargestellt.

Außer dem Pökelbehälter 10 bzw. 10' weist die Vorrichtung ein Lakenbehältnis 25 auf. Dieses Lakenbehältnis 25 besteht bei der Ausführungsform der Fig. 1 und 3 aus drei zylindrischen Hohlkörpern 25', die nach Art kommunizierender Röhren miteinander verbunden sind. Vorzugsweise bestehen diese Hohlkörper 25' aus durchsichtigem Material, z.B. Acrylglas, so dass der jeweilige Füllstand gut erkennbar ist.

Bei der Ausführungsform der Fig. 2 besteht dieses Lakenbehältnis 25 aus einem quaderförmigen, kastenartigen Hohlkörper, der aus rostfreiem Edelstahl hergestellt ist. In beiden Fällen ist das Lakenbehältnis 25 bzw. 25' etwa in gleicher Höhe angeordnet wie der Pökelbehälter 10 bzw. 10'. Das Fassungsvermögen des Lakenbehältnisses ist in beiden Fällen wesentlich geringer als das Aufnahmevolumen des Pökelbehälters 10 bzw. 10' und etwa auf ein Drittel des Fassungsvermögens des Pökelbehälters 10 bzw. 10' ausgelegt.

Wichtig ist auch, dass das Lakenbehältnis vakuumdicht verschlossen bzw. verschließbar ist und statisch auf ein Vakuum ausgelegt ist.

Durch eine Lakenabsaugleitung 27 ist der Boden 12 des Pökelbehälters 10, 10' unterseitig mit dem Lakenbehältnis 25 bzw. gemeinsam mit den drei Hohlkörpern 25' verbunden.

Bei der Ausführungform der Fig. 1 und 3 ist die Lakenabsaugleitung 27 an eine die drei Hohlkörper 25' verbindende Verbindungsleitung 27' angeschlossen.

In dieser Lakenabsaugleitung 27 befindet sich ein elektrisch steuerbares Ventil V2, durch welches wahlweise die Verbindung zwischen dem Pökelbehälter 10, 10' und dem Lakenbehältnis 25 hergestellt und unterbrochen werden kann.

An diese Lakenabsaugleitung 27 ist zudem eine Ablassleitung 29 mit einem ebenfalls elektrisch steuerbaren Ventil V1 angeschlossen, über welches der Pökelbehälter 10, 10' und das Lakenbehältnis 25 entleert werden können.

Mit der Verbindungsleitung 27' bzw. mit der Lakenabsaugleitung 27 ist auch eine Lakenzufuhrleitung 31 verbunden, die im oberen Bereich des Pökelbehälters 10, 10' in die Seitenwand 13 führt und mit einem im oberen Bereich des Pökelbehälters 10, 10' angeordneten Lakenverteiler 32 in Verbindung steht. Durch diese Lakenzufuhrleitung 31, in der sich ein ebenfalls elektrisch steuerbares Ventil V3 befindet, kann Lake aus dem Lakenbehältnis 25 bzw. 25' dem Lakenverteiler 32 zugeführt und auf das sich im Pökelbehälter 10, 10' gelagerte Pökelgut 18 von oben verteilt werden. Der Lakenverteiler 32 besteht beispielsweise aus drei horizontalen Rohren 34, die durch ein quer dazu verlaufendes Verbindungsrohr 35 miteinander in Verbindung stehen und jeweils mehrere Sprüh- oder Träufeldüsen 36 aufweisen.

Oberseitig ist das Lakenbehältnis 25 bzw. 25' durch eine Ansaugleitung 38 über ein elektrisch steuerbares Ventil V7 an eine Vakuumleitung 40 angeschlossen, die mit einer elektromotorisch betriebenen Vakuumpumpe 41 verbunden ist. Die Ansaugleitung 38 ist bei der Ausführungsform der Fig. 1 über eine Verbindungsleitung 38' oberseitig mit allen drei Hohlkörpern 25', die dort das Lakenbehältnis 25 bilden, verbunden.

Über eine zweite Ansaugleitung 44 ist die Vakuumleitung 40 über ein ebenfalls elektrisch steuerbares Ventil V6 mit dem Innenraum des Pökelbehälters 10 bzw. 10' verbunden, so dass von der Vakuumpumpe 41 bei geöffnetem Ventil V6 im Pökelbehälter 10 bzw. 10' ein Vakuum erzeugt werden kann. Ebenso ist es bei geöffnetem Ventil V7 möglich, ein Vakuum im Lakenbehältnis 25 bzw. 25' zu erzeugen.

Bei der Ausführungsform der Fig. 1 mündet die Ansaugleitung 44 im Deckel 16 des Pökelbehälters 10, während die Ansaugleitung 44 bei der Ausführungsform der Fig. 2 unterhalb des von oben aufsetzbaren Deckels 20 in der Rückwand 15 des Pökelbehälters 10' mündet.

Durch eine an die Vakuumleitung 40 angeschlossene Luftzufuhrleitung 46 sind die beiden Ansaugleitungen 38 und 44 bei geöffneten Ventilen V7 und V6 mit der Außenatmosphäre verbindbar. Dabei ist diese Luftzufuhrleitung 46 mit einem ebenfalls elektrisch steuerbaren Ventil V5 versehen. Durch diese Anordnung können der Pökelbehälter 10, 10' und das Lakenbehältnis 25, 25' mit der Außenatmosphäre verbunden werden.

Mittels eines Drucktransmitters 50, der behälterseitig an die Ansaugleitung 44 angeschlossen ist, werden die jeweils herrschenden Druckverhältnisse elektronisch an eine speicherprogrammierte Steuereinheit SPS gemeldet. Bei geschlossenen Ventilen V6 und V7 erfaßt der Drucktransmitter 50 nur den Druck im Pökelbehälter 10, 10'. Bei geöffneten Ventilen V6 und V7 werden die Druckverhältnisse sowohl im Pökelbehälter 10, 10' als auch im Lakenbehältnis 25, 25' erfaßt.

Wie aus dem Schaltschema der Fig. 3 ersichtlich ist, weist die SPS Ausgänge 1, 2, 3 sowie 5, 6 und 7 auf, die durch elektrische Steuerleitungen L1, L2, L3, L5, L6 und L7 mit den einzelnen Ventilen V1, V2, V3, V5, V6 und V7 verbunden sind. Der Eingang 4 ist über die Geberleitung L4 mit dem Drucktransmitter 50 verbunden.

Die beiden Ausgänge 6 und 7 sind über eine gemeinsame Steuerleitung L8 auch mit dem Motor M der Vakuumpumpe 41 verbunden.

Mit den beschriebenen Vorrichtungen gemäß Fig. 1 bzw. gemäß Fig. 2 wird das erfindungsgemäße Pökelverfahren in folgender Weise durchgeführt.

Nach dem Einlegen des gesalzenen und gewürzten, aus einzelnen Fleischstücken bestehenden Pökelgutes 18, in den Pökelbehälter 10, 10', der bis zu etwa drei Vierteln seines Volumens gefüllt werden kann, wird der Pökelbehälter 10, 10' vakuumdicht verschlossen. Das Einlegen des Pökelgutes erfolgt in mehreren Schichten, in denen die einzelnen Fleischstücke unmittelbar aufeinander liegen. Die unterste Schicht liegt dabei auf dem Siebboden 17 auf, der die Möglichkeit schafft, dass sich unterhalb des Pökelgutes in einem zwischen dem Boden 12 und dem Siebboden 17 liegenden Hohlraum Eigenlake des Pökelgutes 18 ansammeln kann.

Nach dem vakuumdichten Verschließen des Pökelbehälters 10 mit der Schwenktüre 11 bzw. 10' mit dem aufschraubbaren oder auf andere Weise befestigten Deckel 20 wird SPS eingeschaltet, die aufgrund des eingegebenen Programms nacheinander folgende Verfahrensschritte steuert.

Zunächst wird bei geschlossenen Ventilen V1, V2 und V3 und geöffneten Ventilen V6 und V7 bei gleichzeitig eingeschalteter Vakuumpumpe 41 sowohl im Pökelbehälter 10, 10' als auch im Lakenbehältnis 25, 25' ein Vakuum von etwa 0,1 bar erzeugt, so dass in diesen ein gegenüber der Atmosphäre um 0,9 bar verringerter Druck herrscht. Ist dieser Druckwert erreicht und vom Drucktransmitter 50 an die SPS gemeldet, so wird die Vakuumpumpe 41 abgeschaltet und es werden die Ventile V6 und V7 geschlossen.

Im Pökelbehälter 10, 10' bildet sich nun im Laufe der Zeit Eigenlake, die sich im Bereich des Bodens 12 sammelt. Zugleich steigt im Pökelbehälter 10, 10' der Druck wieder an. Wenn dieser Druck im Pökelbehälter 10, 10' etwa den Wert von 0,5 bar erreicht hat und dieser Druckzustand vom Drucktransmitter 50 der an die Saugleitung 44 angeschlossen ist, an die SPS gemeldet wird, wird das Ventil V2 geöffnet. Die Eigenlake, die sich am Boden 12 des Pökelbehälters 10, 10' angesammelt hat, wird in das Lakenbehältnis 25, in dem immer noch der niedrigere Druck von 0,1 bar herrscht, gesaugt. Dieser Vorgang dauert nur kurze Zeit, nämlich nur einige Minuten, dann wird das Ventil V2 wieder geschlossen. Zwischen dem Pökelbehälter 10, 10' und dem Lakenbehältnis 25, 25' hat während der Lakenabsaugung ein Druckausgleich stattgefunden, so dass auch im Lakenbehältnis 25, 25' nicht mehr der Druck von 0,1 bar, sondern ein höherer Druck herrscht.

Aufgrund der programmierten Steuerung werden nun die Ventile V6 und V7 geöffnet und gleichzeitig die Vakuumpumpe 41 wieder eingeschaltet, bis in beiden Behältnissen, nämlich im Pökelbehälter 10, 10' und im Lakenbehältnis 25, 25', wieder ein verminderter Druck von 0,1 bar erreicht ist. Die beiden Ventile V6 und V7 werden wieder geschlossen und die Vakuumpumpe 41 abgeschaltet. Es bildet sich weiter Eigenlake im Pökelbehälter 10, 10'. Im Pökelbehälter 10, 10' steigt der Druck langsam wieder an. Bei etwa 0,5 bar wird das Ventil V2 wieder geöffnet und die angesammelte Lake aus dem Pökelbehälter 10, 10' in das Lakenbehältnis 25, 25'gesaugt, bis wieder Druckausgleich erreicht ist. Es folgt wieder ein Nachevakuieren.

Dieses Spiel wiederholt sich über einen Zeitraum von etwa 72 Stunden, der als Lakenbildungsphase bezeichnet wird.

Während die zwischen den Lakenabsaugvorgängen liegenden Zeiträume jeweils mehrere Stunden umfassen, dauern die Lakenabsaugvorgänge und die darauffolgenden Drucknachregulierungen jeweils nur fünf bis zehn Minuten.

Wenn diese auf etwa 72 Stunden programmierte Lakenbildungsphase beendet ist und sich keine Eigenlake mehr im Pökelbehälter 10, 10' bildet, ist das Lakenbehältnis etwa zur Hälfte mit Lake gefüllt. Es wird nun ein sich wiederholendes Spiel anderer Vorgänge eingeleitet.

Auch während dieser zweiten sog. Reifephase, wird der im Pökelbehälter 10, 10' herrschende Druck laufend gemessen. Durch den Drucktransmitter 50 werden die programmierten Grenzwerte, die auch während dieser Phase auf etwa 0,1 bar bzw. 0,5 bar festgelegt sein können, aber auch andere Werte annehmen können, an die SPS gemeldet. Zusätzlich zu der Lakenabsaugung über die Saugleitung 27 und das Ventil V2, findet nun im Wechsel eine Lakenrückführung über die Lakenzufuhrleitung 31 und das Ventil V3 statt. Dies wird dadurch bewirkt, dass von Zeit zu Zeit über das geöffnete Ventil V5 und die Luftzufuhrleitung 46, die Vakuumleitung 40 und das Ventil V7 ein Druckanstieg auf normalen Luftdruck im Lakenbehältnis 25, 25' stattfindet.

Es wird somit zwischen dem Pökelbehälter 10, 10' und dem Lakenbehältnis 25, 25' eine Druckdifferenz herbeigeführt, die bei zusätzlich geöffnetem Ventil V3 ein Absaugen eines Teils der im Lakenbehältnis 25 angesammelten Lake in den Pökelbehälter 10, 10' zur Folge hat. Dadurch wird von der gesammelten Eigenlake ein Teil über die Lakenzuführleitung 31 und den Lakenverteiler 32 von oben auf das Pökelgut 18 verteilt. Auch bei diesem Absaugvorgang bzw. Rückführvorgang der Eigenlake in den Pökelbehälter 10, 10', findet ein Druckausgleich zwischen dem Pökelbehälter 10, 10' und dem Lakenbehältnis 25, 25' in der Weise statt, dass der Druck im Pökelbehälter 10, 10' sich demjenigen des Lakenbehältnisses 25, 25' steigend angleicht.

Während eines solchen Benetzungsvorganges, der etwa 5 Minuten bis 10 Minuten dauert, werden etwa zwei bis fünf Liter Lake auf das Pökelgut gegeben.

Dieser Druckanstieg wird vom Drucktransmitter 50 wieder an SPS gemeldet. Bei Erreichen eines gewissen Druckwertes wird das Ventil V3 geschlossen und die Lakenrückführung unterbrochen. Dann werden bei geschlossenem Ventil V5 die Ventile V6 und V7 geöffnet und zugleich die Vakuumpumpe 41 wieder eingeschaltet. Im Pökelbehälter 10, 10' und im Lakenbehältnis 25 entsteht wieder ein Vakuum. Bei Erreichen eines vorgegebenen Wertes, beispielsweise 0,1 bar, gemessen und übertragen vom Drucktransmitter 50, werden die Ventile V6 und V7 wieder geschlossen und die Vakuumpumpe 41 abgeschaltet.

Im Laufe einiger Stunden steigt dann der Druck im Pökelbehälter 10, 10' wieder langsam an. Bei Erreichen des vorgegebenen Druckwertes von beispielsweise 0,5 bar, wird, gesteuert von SPS, nun zunächst das Ventil V2 wieder geöffnet, so dass nun wieder ein Absaugvorgang der überschüssigen Lake aus dem Pökelbehälter 10, 10' in das Lakenbehältnis 25, 25' stattfindet.

Zwischen den einzelnen Benetzungsphasen wird somit die sich am Boden 12 des Pökelbehälters 10 ansammelnde überschüssige Lake wieder in das Lakenbehältnis 25, 25' zurückgesaugt. Nach diesem Lakenabsaugvorgang wird bei geschlossenem Ventil V6 über die geöffneten Ventile V5 und V7 und geschlossenen Ventile V2 und V3 atmosphärischer Druck in das Lakenbehältnis 25, 25' gegeben, um danach wieder eine Benetzungsphase einzuleiten, in dem das Ventil V3 wieder für etwa 5 bis 10 Minuten geöffnet wird.

Diese Wechselspiele wiederholen sich periodisch. Nach Ablauf der sog. Reifephase von etwa 72 Stunden werden die Ventile V5, V6 und V7 geöffnet, und dadurch Druckausgleich zwischen der Atmosphäre einerseits und dem Pökelbehälter 10, 10' sowie dem Lakenbehältnis 25, 25' andererseits hergestellt. Die sich noch im Lakenbehältnis 25 befindende Lake kann dann durch Öffnen des Ablaßventils V1 abgelassen werden. Das Pökelgut wird dann bei geöffnetem Pökelbehälter 10, 10' entnommen. Nach entsprechender Reinigung kann eine neue Beschickung vorgenommen und ein neuer Pökelvorgang eingeleitet werden.

Da der Pökelbehälter 10, 10' sowohl während der gesamten Lakenbildungsphase als auch während der darauffolgenden Reifephase immer dicht geschlossen ist, ist das Eindringen von schädlichen Keimen völlig ausgeschlossen.

Ein weiterer wesentlicher Vorteil dieses Verfahrens besteht darin, dass kein Wasser zum Wässern des Pökelgutes verwendet wird.

Statt der üblichen 16 bis 22 Tage, die vergleichbare herkömmliche Pökelverfahren benötigen, werden mit dem erfindungsgemäßen Verfahren nur sechs Tage benötigt, um eine gleichmäßig hohe Pökel- und Reifequalität des Pökelguts zu erreichen.

## Patentansprüche

1. Verfahren zum Pökeln und Reifen von Frischfleisch, insbesondere von Rohschinken und Salami, bei dem in einen Pökelbehälter eingelegtes Pökelgut mehrfach mit der sich bildenden Eigenlake benetzt wird,
**gekennzeichnet durch folgende Verfahrensschritte:**
**a)** das Pökelgut wird während einer mehrere Stunden dauernden Lakenbildungsphase einem verminderten atmosphärischen Druck ausgesetzt,
**b)** während dieser Lakenbildungsphase wird die sich bildende Lake laufend oder in geregelten Zeitabständen vom Pökelgut abgesaugt und gesammelt;
**c)** während einer der Lakenbildungsphase folgenden, etwa gleich lange dauernden Reifephase wird unter mehrfacher Wiederherstellung des verminderten atmosphärischen Drucks in einer Folge von Benetzungsvorgängen jeweils ein Teil der gesammelten Lake auf das Pökelgut (18) verteilt und von diesem wieder abgesaugt.

2. Pökelverfahren nach Anspruch 1, **dadurch gekennzeichnet, dass** der in der Umgebung des Pökelguts (18) herrschende atmosphärische Druck etwa 0,1 bar beträgt.

3. Pökelverfahren nach Anspruch 1, **dadurch gekennzeichnet, dass** die Lakenbildungsphase zwischen 60 und 80 Stunden, vorzugsweise 72 Stunden dauert.

4. Pökelverfahren nach Anspruch 1, **dadurch gekennzeichnet, dass** das Absaugen der Lake vom Pökelgut (18) in der Lakenbildungsphase jeweils vor einem nachregulierenden Vermindern des wiederholt beispielsweise auf 0,4 bar bis 0,6 bar angestiegenen Drucks im Pökelbehälter (10, 10') auf den Sollwert von 0,1 bar erfolgt.

5. Pökelverfahren nach Anspruch 1, **dadurch gekennzeichnet, dass** die Benetzungsvorgänge während der Reifephase im Wechsel mit nachregulierenden Druckverminderungsphasen und Absaugvorgängen stattfinden.

6. Pökelverfahren nach Anspruch 2, **dadurch gekennzeichnet, dass** die nachregulierenden Druckverminderungsphasen auch während der Reifephase jeweils eingeleitet werden, wenn der in der Umgebung des Pökelguts (18) herrschende Druck einer Druckverminderung von nur 0,4 bar bis 0,6 bar entspricht.

7. Pökelverfahren nach Anspruch 1, **dadurch gekennzeichnet, dass** das portionierte Pökelgut (18) sowohl während der Lakenbildungsphase als auch während der nachfolgenden Reifephase mehrschichtig gelagert ist und bleibt.

8. Vorrichtung mit einem Pökelbehälter, der mittels einer Türe (11) oder eines Deckels (20) dicht verschließbar und über eine Vakuumleitung (40) an eine Vakuumpumpe (41) anschließbar ist, zur Durchführung des Pökelverfahrens nach den Ansprüchen 1 bis 6,
**gekennzeichnet durch**
ein Lakenbehältnis (25, 25'), das an die Vakuumpumpe (41) anschließbar ist und das **durch** eine mit einem elektrisch steuerbaren Ventil (V2) versehene Lakenabsaugleitung (27) und **durch** eine mit einem weiteren elektrisch steuerbaren Ventil (V3) versehene Lakenzuführleitung (31) mit dem Pökelbehälter (10, 10') verbunden ist.

9. Vorrichtung nach Anspruch 8, **dadurch gekennzeichnet, dass** der Pökelbehälter (10, 10') eine Belüftungsleitung (40) aufweist, durch welche er mit der Atmosphäre verbindbar ist.

10. Vorrichtung nach Anspruch 8 oder 9, **dadurch gekennzeichnet, dass** das Laugenbehältnis (25, 25') über ein elektrisches Steuerventil (V7) in seinem oberen Bereich an die Vakuumleitung (40) mit der Vakuumpumpe (41) angeschlossen ist.

11. Vorrichtung nach Anspruch 8 oder 9, **dadurch gekennzeichnet, dass** die Vakuumleitung (40) über ein Steuerventil (V6) mit dem Pökelbehälter (10, 10') und über ein weiteres Steuerventil (V5) mit der Belüftungsleitung (46) verbindbar ist.

12. Vorrichtung nach Anspruch 8, **dadurch gekennzeichnet, dass** die Lakenabsaugleitung (27) jeweils unterseitig am Pökelbehälter (10, 10') und am Lakenbehältnis (25, 25') angeschlossen ist.

13. Vorrichtung nach Anspruch 8 oder 12, **dadurch gekennzeichnet, dass** die Lakenzuführleitung (31) unterseitig an das Lakenbehältnis (25, 25') angeschlossen und mit einem sich im oberen Bereich des Pökelbehälters (10, 10') befindenden Lakenverteiler (32) verbunden ist.

14. Vorrichtung nach Anspruch 8, **dadurch gekennzeichnet, dass** die Lakenabsaugleitung (27) an eine mit einem Ablaßventil (30) versehene Ablaßleitung (29) angeschlossen ist.

15. Vorrichtung nach einem der Ansprüche 8 bis 14, **dadurch gekennzeichnet, dass** zur Steuerung der Vakuumpumpe (41) und der Steuerventile (V1 bis V7) eine SPS-Einheit vorgesehen ist, die in Abhängigkeit von im Pökelbehälter (10, 10') herrschenden, vorgebbaren Druckwerten und Zeitspannen die Laugenabsaugvorgänge und die Laugenzuführvorgänge steuert.

16. Vorrichtung nach Anspruch 15, **dadurch gekennzeichnet, dass** ein die Druckwerte im Pökelbehälter (10, 10') messender Drucktransmitter (50) an den Pökelbehälter (10, 10') angeschlossen und über eine elektrische Geberleitung (L4) mit der SPS-Einheit verbunden ist.

17. Vorrichtung nach Anspruch 8, **dadurch gekennzeichnet, dass** das Lakenbehältnis (25) aus mehreren Einzelbehältern (25') besteht, die unterseitig an eine gemeinsame Lakenabsaugleitung (27) und oberseitig durch ein elektrisches Steuerventil (V7) gemeinsam an die Vakuumleitung (40) anschließbar sind.

18. Vorrichtung nach Anspruch 8 oder 17, **dadurch gekennzeichnet, dass** das Fassungsvermögen des Lakenbehältnisses (25) bzw. das gesamte Fassungsvermögen der Einzelbehälter (25') geringer ist als das des Pökelbehälters (10, 10').

## Claims

1. Process for pickling and curing uncooked meat, in particular uncooked ham and salami, in which pickled product placed into a pickling container is wetted several times with the forming brine,
**characterised by** the following process steps:
a) the pickled product is exposed during a brine formation phase lasting several hours to reduced atmospheric pressure,
b) during this brine formation phase the forming brine is suctioned off and collected from the pickled product continually or at regular time intervals;
c) during a curing phase following the brine formation phase and lasting about the same time, with a repeated formation of reduced atmospheric pressure in a series of wetting processes, a portion of the collected brine is distributed onto the pickled product (18) and suctioned off the latter again.

2. Pickling process according to claim 1, **characterised in that** the atmospheric pressure in the environment of the pickled product (18) is about 0.1 bar.

3. Pickling process according to claim 1, **characterised in that** the brine formation phase lasts between 60 and 80 hours, preferably 72 hours.

4. Pickling process according to claim 1, **characterised in that** the suctioning off of the brine from the pickled product (18) is performed in the brine formation phase respectively before a subsequent regulating reduction of the pressure in the pickling container (10, 10'), which has risen for example to 0.4 bar to 0.6 bar, to the desired value of 0.1 bar.

5. Pickling process according to claim 1, **characterised in that** the wetting processes take place during the curing phase alternating with subsequent regulating pressure reduction phases and suction processes.

6. Pickling process according to claim 2, **characterised in that** the subsequent regulating pressure reduction phases are also introduced during the curing phase, if the pressure in the environment of the pickled product (18) corresponds to a pressure reduction of only 0.4 bar to 0.6 bar.

7. Pickling process according to claim 1, **characterised in that** the portioned pickling product (18) is layered and remains in multiple layers during both the brine formation phase and during the subsequent curing phase.

8. Apparatus with a pickling container, which can be connected by means of a door (11) or a cover (20) in a tightly sealed manner and via a vacuum line (40) to a vacuum pump (41), for performing the pickling process according to claims 1 to 6,
**characterised by**
a brine container (25, 25') which is connectable to the vacuum pump (41) and by means of a brine suction line (27) provided with an electrically controllable value (V2) and a brine supply line (31) provided with a further electrically controllable value (V3) is connected to the pickling container (10, 10').

9. Apparatus according to claim 8, **characterised in that** the pickling container (10, 10') comprises a ventilation line (40), via which it can be connected to the atmosphere.

10. Apparatus according to claim 8 or 9, **characterised in that** the salt solution container (25, 25') is connected via an electric control valve (V7) in its upper area to the vacuum line (40) with the vacuum pump (41).

11. Apparatus according to claim 8 or 9, **characterised in that** the vacuum line (40) can be connected via a control valve (V6) to the pickling container (10, 10') and via a further control valve (V5) to the ventilation line (46).

12. Apparatus according to claim 8, **characterised in that** the brine suction line (27) is connected on the underside to the pickling container (10, 10') and the brine container (25, 25') respectively.

13. Apparatus according to claim 8 or 12, **characterised in that** the brine supply line (31) is connected on the underside to the brine container (25, 25') and is connected to a brine distributor (32) located in the upper area of the pickling container (10, 10').

14. Apparatus according to claim 8, **characterised in that** the brine suction line (27) is connected to an outlet line (29) provided with an outlet valve (30).

15. Apparatus according to one of claims 8 to 14, **characterised in that** to control the vacuum pump (41) and the control valves (V1 to V7) an SPS unit is provided, which depending on the existing, predefinable pressure values and time intervals in the pickling container (10, 10') controls the salt solution suction processes and the salt solution supply processes.

16. Apparatus according to claim 15, **characterised in that** a pressure transmitter (50) measuring the pressure values in the pickling container (10, 10') is connected to the pickling container (10, 10') and is connected via an electric transmitter line (L4) to the SPS unit.

17. Device according to claim 8, **characterised in that** the brine container (25) consists of several individual containers (25'), which are connected on the underside to a common brine suction line (27) and on the upper side by an electric control valve (V7) jointly to the vacuum line (40).

18. Device according to claim 8 or 17, **characterised in that** the holding capacity of the brine container (25) or the entire holding capacity of the individual containers (25') is lower than that of the pickling container (10, 10').

## Revendications

1. Procédé de salaison et de maturation de viande fraîche, en particulier de jambon cru et de salami, dans lequel du produit de salaison déposé dans un récipient de salaison est recouvert ou imprégné plusieurs fois par la propre saumure qui se forme,
**caractérisé par** les étapes opératoires suivantes :
a) au cours d'une phase de formation de saumure, durant plusieurs heures, le produit de salaison est soumis à une pression atmosphérique réduite,
b) durant cette phase de formation de saumure, la saumure qui se forme est séparée d'avec le produit de salaison, par aspiration, en continu ou par intervalles de temps régulés, puis est recueillie et rassemblée,
c) pendant une phase de maturation succédant à la phase de formation de saumure et présentant sensiblement la même durée, une part respective de la saumure recueillie est répartie sur le produit de salaison (18) et est de nouveau séparée d'avec ce dernier, par aspiration, avec restauration multiple de la pression atmosphérique réduite, en une succession de processus d'imprégnation ou de recouvrement.

2. Procédé de salaison selon la revendication 1, **caractérisé par le fait que** la pression atmosphérique, régnant dans l'environnement du produit de salaison (18), vaut environ 0,1 bar.

3. Procédé de salaison selon la revendication 1, **caractérisé par le fait que** la phase de formation de saumure dure entre 60 et 80 heures, de préférence 72 heures.

4. Procédé de salaison selon la revendication 1, **caractérisé par le fait que** la séparation de la saumure d'avec le produit de salaison (18) par aspiration, durant la phase de formation de saumure, a respectivement lieu avant une réduction post-régulatrice jusqu'à la valeur de consigne de 0,1 bar, dans le récipient de salaison (10, 10'), de la pression répétitivement accrue de 0,4 bar à 0,6 bar, par exemple.

5. Procédé de salaison selon la revendication 1, **caractérisé par le fait que** les processus d'imprégnation s'opèrent, au cours de la phase de maturation, en alternance avec des phases de réduction de pression et avec des processus de séparation par aspiration, exerçant un effet post-régulateur.

6. Procédé de salaison selon la revendication 2, **caractérisé par le fait que** les phases post-régulatrices de réduction de pression sont respectivement lancées, également au cours de la phase de maturation, lorsque la pression régnant dans l'environnement du produit de salaison (18) correspond à une réduction de pression d'uniquement de 0,4 bar à 0,6 bar.

7. Procédé de salaison selon la revendication 1, **caractérisé par le fait que** le produit de salaison (18) portionné est et demeure stocké en plusieurs couches aussi bien durant la phase de formation de saumure, que durant la phase successive de maturation.

8. Dispositif pour la mise en oeuvre du procédé de salaison selon les revendications 1 à 7, muni d'un récipient de salaison qui peut être obturé hermétiquement au moyen d'une porte (11) ou d'un couvercle (20), et peut être raccordé à une pompe à vide (41) par l'intermédiaire d'un conduit de dépression (40),
**caractérisé par**
un réceptacle de saumure (25, 25') qui peut être raccordé à la pompe à vide (41) et est relié, audit récipient de salaison (10, 10'), par l'intermédiaire d'un conduit (27) d'extraction de saumure par aspiration, équipé d'une vanne (V2) commandable électriquement, et d'un conduit (31) d'amenée de saumure qui est équipé d'une autre vanne (V3) commandable électriquement.

9. Dispositif selon la revendication 8, **caractérisé par le fait que** le récipient de salaison (10, 10') présente un conduit de ventilation (46) par l'intermédiaire duquel il peut être relié à l'atmosphère.

10. Dispositif selon la revendication 8 ou 9, **caractérisé par le fait que** le réceptacle de saumure (25, 25') est raccordé dans sa région supérieure, par l'intermédiaire d'une vanne de commande électrique (V7), au conduit de dépression (40) associé à la pompe à vide (41).

11. Dispositif selon la revendication 8 ou 9, **caractérisé par le fait que** le conduit de dépression (40) peut être relié au récipient de salaison (10, 10') par l'intermédiaire d'une vanne de commande (V6), et au conduit de ventilation (46) par l'intermédiaire d'une autre vanne de commande (V5).

12. Dispositif selon la revendication 8, **caractérisé par le fait que** le conduit (27) d'extraction de saumure par aspiration est respectivement raccordé, en partie basse, au récipient de salaison (10, 10') et au réceptacle de saumure (25, 25').

13. Dispositif selon la revendication 8 ou 12, **caractérisé par le fait que** le conduit (31) d'amenée de saumure est raccordé en partie basse au réceptacle de saumure (25, 25'), et est relié à un répartiteur de saumure (32) situé dans la région supérieure du récipient de salaison (10, 10').

14. Dispositif selon la revendication 8, **caractérisé par le fait que** le conduit (27) d'extraction de saumure par aspiration est raccordé à un conduit de décharge (29) muni d'une vanne d'évacuation (30).

15. Dispositif selon l'une des revendications 8 à 14, **caractérisé par** la présence, pour piloter la pompe à vide (41) et les vannes de commande (V1 à V7), d'une unité SPS qui pilote les processus d'extraction de saumure par aspiration, et les processus de délivrance de saumure, en fonction de laps de temps et de valeurs de pression pouvant être préétablis, régnant dans le récipient de salaison (10, 10').

16. Dispositif selon la revendication 15, **caractérisé par le fait qu'**un transducteur de pression (50), mesurant les valeurs de pression régnant dans le récipient de salaison (10, 10'), est raccordé audit récipient de salaison (10, 10') et est relié à l'unité SPS par l'intermédiaire d'un conducteur électrique de transmission (L4).

17. Dispositif selon la revendication 8, **caractérisé par le fait que** le réceptacle de saumure (25) est constitué de plusieurs réceptacles individuels (25') pouvant être raccordés, en partie basse, à un conduit commun (27) d'extraction de saumure par aspiration ; et pouvant être conjointement raccordés au conduit de dépression (40), en partie haute, par l'intermédiaire d'une vanne de commande électrique (V7).

18. Dispositif selon la revendication 8 ou 17, **caractérisé par le fait que** la contenance du réceptacle de saumure (25), ou la contenance totale des réceptacles individuels (25'), est respectivement moindre que celle du récipient de salaison (10, 10').
